# EUROPEAN PATENT APPLICATION

(11) **EP 1 445 021 A1**
(43) Date of publication of application: **11.08.2004**
(21) Application number: 04001942.4
(22) Date of filing: 29.01.2004
(51) Int. Cl.: B01L 3/00

(54) **Blood sample collection slide**

(30) Priority: 30.01.2003 US 354939; 11.07.2003 US 486405 P; 11.07.2003 US 486470 P
(71) Applicant: Bradly Ferguson Davin, Seneca, South Carolina 29678 (US)
(72) Inventor: Bradly Ferguson Davin, Seneca, South Carolina 29678 (US)
(74) Representative: Becker Kurig Straus

(57) **Abstract**

The present invention related to a collection or storage device for a biological specimen. The device comprises a slide mount with a biological specimen collection material imbedded in the mount. The slide mount may have the plan area of a 35 mm slide or of a 96 well microtiter plate. A unique identification means is disposed on the device. A solid backed version and a protective front cover are illustrated. The slide mount is readily transported, stored and retrieved with available slide handling equipment.

## Description

### Technical Field

The present invention relates to a collection slide for a biological specimen. The device comprises a rigid slide mount containing a biological specimen collection material. The device can be printed with a unique numbering system, which can be used for identification. An advantage of the present invention is that the use of the slide format will allow easy sampling transport, storage and automation in handling. The mount is particularly characterized by having a protective cover to protect the sample during field collection. A large size, corresponding to a 96 well microtiter plate, is suitable also.

### Background and Prior Art

Sampling of body fluids, especially blood, is standard methodology for medical diagnostics. All states require newborns to be screened for diseases such as PKU. Dried blood has been found to be very useful for screening for diseases and for DNA analysis and has the advantage that a minimum amount of blood is required and the likelihood of broken shipping containers is not an issue. Screening for viral diseases such as HIV can be done in high volume at central laboratories with lower risk of exposure to technicians.

U.S. patent number 6,007,104 and related U.S. patent number 6,152,493 to Draper, disclose a combined medical device and form having a unitary substrate divided into a form portion and a device portion. Identification material, preferably identical and machine-readable, is present on both the form portion and the device portion. The Draper device comprises a one-piece substrate having a form portion and a device portion. Biographical data is included on a section on the form portion of the substrate. Form identification material is on the form portion while device identification material is on the device portion, such that one can match the two portions. A separation line divides the two portions, and thus separates the respective two identification materials.

The collection, shipment and storage of blood and other body fluids on porous "filter paper" is now well developed. Reference is made to Ostrup, U.S. patent number 5,460,057, and to U.S. patents number 6,291,179; 6,294,203; and 6,447,804 and the plethora of references cited therein for a summary of the status of the art for blood sampling, especially for DNA analysis and to Putcha et al., U.S. patent number 6,133,036 and references cited therein for the collection of other "clear" fluids. All are incorporated by reference herein. Representative commercial products are the Whatman FTA™ system and the Schleicher and Schuell ISO Code™ system.

Heretofore, collection has been based upon the multi-well principle long used for filtration and sample handling in laboratory settings. As automation is increased and laboratories operate 24 hours each day, there continues to be a need for higher throughput of samples using fewer technicians, and for totally automated storage and retrieval.

A related issue, in an era of increasing concern about bioterrorism, is security and safety of specimens being shipped from physician's offices and regional hospitals to large laboratories. An excellent review of shipping issues is Knudsen et al., *Guidelines for the Shipment of Dried Blood Specimens*, Infant Screening 16, (1) 1993 which summarizes the applicability of 42 CFR Part 72 to the handling of dried blood samples.

A need exists, therefore, for improved systems to ship, analyze and store dried body fluids in a safer, faster method with positive long-term identification of the source of the specimen.

Heretofore, the collection of blood and other body fluids has been performed in comparatively clean conditions such as a clinic or hospital. Even crime scene investigations and autopsies are performed in controlled, if not always aseptic, conditions. As the usefulness of DNA sampling becomes more apparent, collections in different and less controlled circumstances will be occurring. A means for collecting and preserving specimens, that protects the sample while allowing ease of shipment, analysis and storage, is needed also.

The 86 x 128mm format has become a standard size for mechanized manipulation in the laboratory using "microtiter plates" which have 96 depressions or wells (and multiples thereof, especially 384 wells).

### Brief Description of the Invention

An object of the present invention is to provide a rigid support for transport and handling of the biological specimen collection material such as paper.

Another object of the present invention is to provide protection to the biological specimen collection paper as a result of its being recessed in a cassette.

It is an additional objective of the invention to provide an inexpensive but effective protective means to keep the collected samples clean during collection in dirty locations while still allowing highly automated analysis in the laboratory.

A further object of the invention is that it may be manufactured at a high rate using currently available equipment. In addition, the specimen samples may be shipped, analyzed and stored using available storage, shipping and handling sleeves and magazines already familiar to medical laboratories.

It is yet another object of the invention that the specimen sample holder may be permanently identified as by being serialized so as to prevent separation of the specimen from an indicium of source.

These and other objects of the invention may be attained by placing a specimen collection medium in a slide holder having the plan area and thickness of a'35 mm slide holder, the slide holder being permanently marked to prevent unintentional separation of the specimen from the indicium of source. The slide may be shipped in a sleeve, a linear magazine holding a plurality of specimens or a drum magazine.

The specimen holder, essentially a slide holder for a 35 mm projection film and may be pasteboard, plastic or equivalent rigid material into which a suitable filter paper has been placed. Each specimen slide is serialized by one or more of a die stamped or printed number or a bar code.

The specimen holder may have one closed side so that only a single face is exposed. The exposed face may be protected using a sliding window cover formed from an impervious material which may be opened during sample collection then closed until such time as it is ready for analysis

These same and other objects of the invention may be attained in a second embodiment by placing a specimen collection medium in a standard size slide identical in length and width to a standard 96 well microtiter plate, the slide holder being permanently marked to prevent unintentional separation of the specimen from the indicium of source. The slide may be shipped in a sleeve, such as a linear magazine holding a plurality of specimens.

The specimen holder which has the same plan area of a 96 or 340 well microtiter may be pasteboard, plastic or equivalent rigid material into which a suitable filter paper has been placed. Each specimen slide is serialized by one or more of a die stamped or printed number, a bar code or a radio frequency identification or "smart chip."

### Brief Description of the Drawings

Fig. 1A shows the obverse and reverse of a specimen sample holder according to this invention.

Fig. 1B shows the location for the placement of indicia on the specimen holder.

Fig. 1C shows an exploded cross-section of the specimen holder.

Fig. 1D and 1E show the inside surface of the two halves of the slide holder.

Fig. 2 is an exploded perspective of the internal Collection Paper prior to being cut to size.

Fig. 3 shows the obverse (A) and reverse (B) of a slide mount having a protective window.

Fig. 4 shows a slide mount according to Fig. 3 (A) with a printed demographic area for unique identification.

Fig. 5 is an exploded view of the slide mount having a protective window.

Figs. 6A and 6B show plan views of a slide mount front and rear halves according to Figs. 3 (A) and 3 (B).

Fig. 7A shows the obverse and Fig. 7B shows the reverse of a slide mount having two protective windows.

Fig. 8 shows a second embodiment of the internal collection paper prior to being cut to size.

Fig. 9 shows the obverse face of a large format specimen sample holder according to one aspect of this invention.

Fig. 10 shows the reverse face of a large format specimen sample holder according to one aspect of this invention.

Fig. 11 shows the reverse face of a large format specimen holder according to an additional aspect of this invention.

Fig. 12 shows an exploded view of a large format species holder according to this invention.

### Detailed Description of the Invention

The present invention relates to a biological specimen collection paper enclosed in a standard slide mount encasement. The specimen may be blood, other body fluids or extracts from tissues or bones. The collection paper is recessed within the slide which minimizes the potential for contamination during collection, shipment, analysis and storage.

A biological/DNA specimen collection material is encased in the slide mount casing. By such an arrangement, one can handle the slide mount without making contact with the collection material. The size being that of a standard film slide mount will allow the device to be handled in all equipment built to transport or store slide mounts. The slides are available in pasteboard or plastic.

To ease in application of the sample, the collection material can be printed with circles to aid in targeting the application of the sample as well as the retrieval of the sample.

The specimen collection paper may be any commercially available filter paper used for the collection, shipment, analysis and storage of biological fluids. Both untreated and treated papers may be used, depending upon the type of fluid to be tested, the type of test to be performed, and the expected time of storage. The papers are available from several sources and for purposes of this invention are most advantageously purchased in roll form. The rolls are punched so that they may be transported using sprockets in available film slide mounting equipment and mounted using such equipment using the same mounting procedures as in film slide handling. Representative is the Loersch™ slide mount system. Alternative sprocket pitches may be used depending on the type of collection medium used.

The frame portion of the obverse side at least may be marked to indicate a unique serial number for the specimen slide. The indicium may be stamped or printed in numeric or alpha numeric form. Additional information may be shown also relating to type of paper, source or distributor, date of manufacture, etc.

In the preferred embodiment, each specimen slide is imprinted with a barcode which becomes a serial number of that unique specimen slide. The barcode may be applied directly to the slide or printed on a label. One or more additional barcoded label strips attached to a release paper may be attached to the frame. The additional strips may be removed at the sampling location and placed on a permanent record at that location and/or removed at the processing laboratory for their records. One advantage of a barcode is that the information may be entered into a computer using an inexpensive wand-type scanner and forwarded to the analytical laboratory electronically. The specimen slides may be dried and shipped using conventional slide magazines as used in most slide projectors- either straight fed or carousel magazine style or pouch-type mailers described by Knudsen et al.

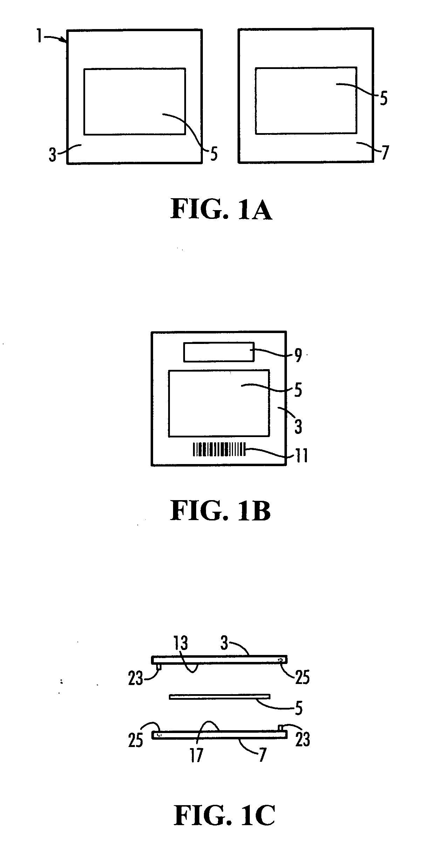

Referring to the drawings, Fig. 1A shows the slide mount **1** having an obverse frame face **3**, a reverse frame face **7** and a window containing a specimen collection paper **5**. Fig. 1B indicates an area of the obverse face **3** having a location **9** for entry of data and a barcode **11.**

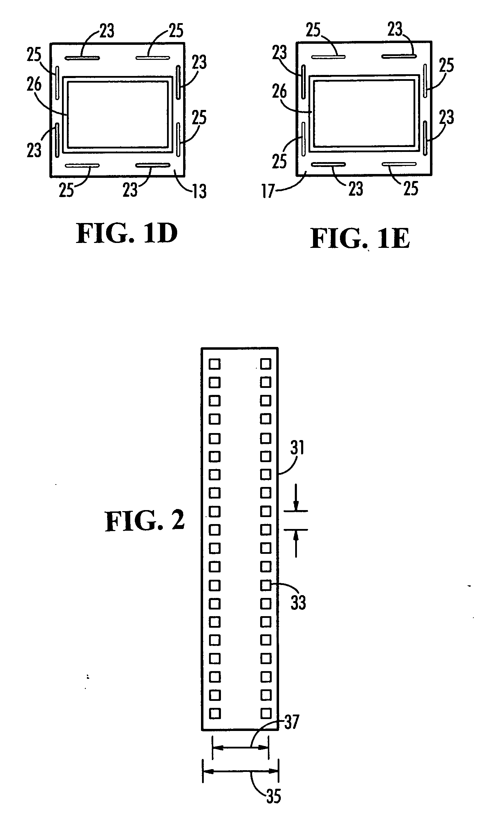

Fig. 1C shows an exploded view of a three-part specimen slide which is snapped together. The obverse face **3** has a back **13** and the reverse face **7** has a back **17**. The specimen collection paper **5** is placed in a pocket 2-6 between the backs **13, 17** and the slide snapped together. As shown in Figs. 1D and 1E, ridges **23** and grooves **25** match fact to face and snap together. This arrangement is most convenient with plastic slide mounts and has the advantage that the frame can be reused when there is no need to archive the specimen. Plastic mounts have the advantage that the mounts minimize strain on the collection paper, providing consistent dried blood densities for analysis. For this reason, the medium is held in a pocket 26 in the slide.

Fig 2 shows a strip of specimen collection paper **31** that has sprocket holes **33** which have been punched at a pitch of approximately 4.750 mm. Standard width 35 for the paper is 34.97 mm and the width 37 between sprocket holds across the paper is 25.37 mm. This pattern is identical to that used in commercial 35mm photographic film and allows assembly, shipping, processing and archiving to be done using available film handling equipment. The slide is suitable for two or three spots of approximately 9.5mm diameter.

When the specimen is to be archived, instead of the arrangement shown in Fig. 1C, 1D and 1E, the two sides of the slide may be bonded such as by using an adhesive.

Circles may be printed on the collection paper to provide a target for the sampling technician.

Once at the analytical laboratory, the specimen may be processed using any proprietary dried blood spot puncher, of which the BSD Technologies International Pty, of Queensland AU is preferred. The punch is then processed according to the protocol for the selected analysis.

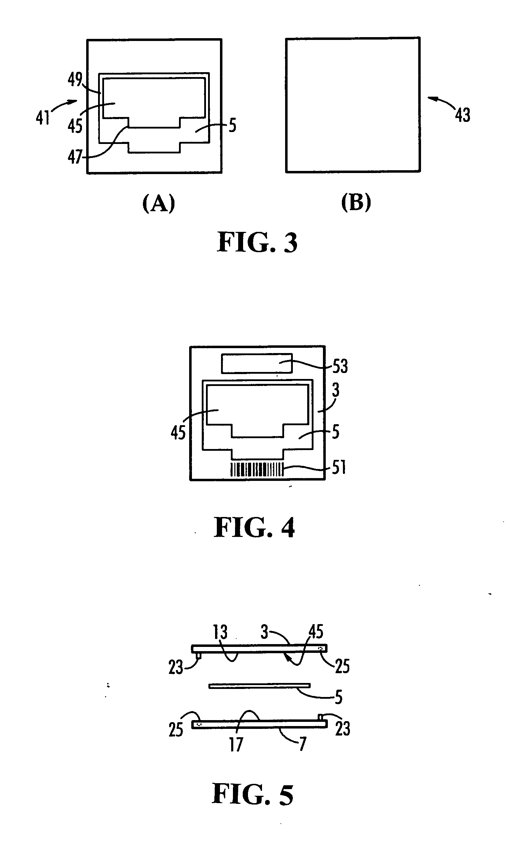

Samples collection may occur at locations which compromise the cleanliness of the collection paper. Animal husbandry is one example. In such circumstances, protection of the collection paper is of concern. Figs 3 (A) and 3 (B) illustrate a slide mounting specific for such exigencies. The obverse face 41 has exposed collecting paper 5. The reverse face 43 is solid. A sliding protector 45 having a tab 47 is retractable into a side 49 of the slide. The degree of coverage of collection paper 5 by slide 45 depends upon the depth of side 49.

Fig. 4 shows how the mount according to Figs. 3 (a) and 3 (b) may be identified. The obverse face 3 carries a unique identifier 51, illustrated as a bar code but which may be any visible or invisible unique identifier including random letters, letters and numbers, and radio frequency identification target (RFID). Space on the surface, identified as 53, may be used for demographic information. The demographic information may also be stored in the RFID if appropriate equipment is available on-site.

Fig. 5 is an exploded view of the slide mount of Fig. 3. When compared to Fig. 1C, it may be seen that the sliding protector 45 is mounted between collection paper 5 and back 13.

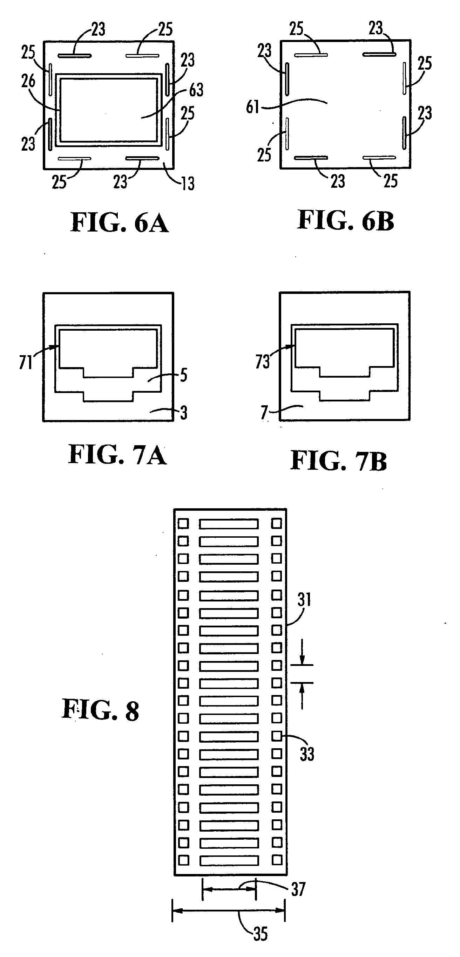

Figs. 6 (a) and 6 (b) illustrate the construction of the second embodiment with solid back 61 and window 63. The collection paper is not shown.

Figs. 7 (a) and 7 (b) illustrate a third embodiment having protective sliding portions 71 and 73 on both the obverse and reverse faces.

Fig. 8 illustrates a strip of filter paper equivalent in size to 35mm film. The paper may be protected as the film. The pitch may be increased to reflect the hardness of the medium being fed.

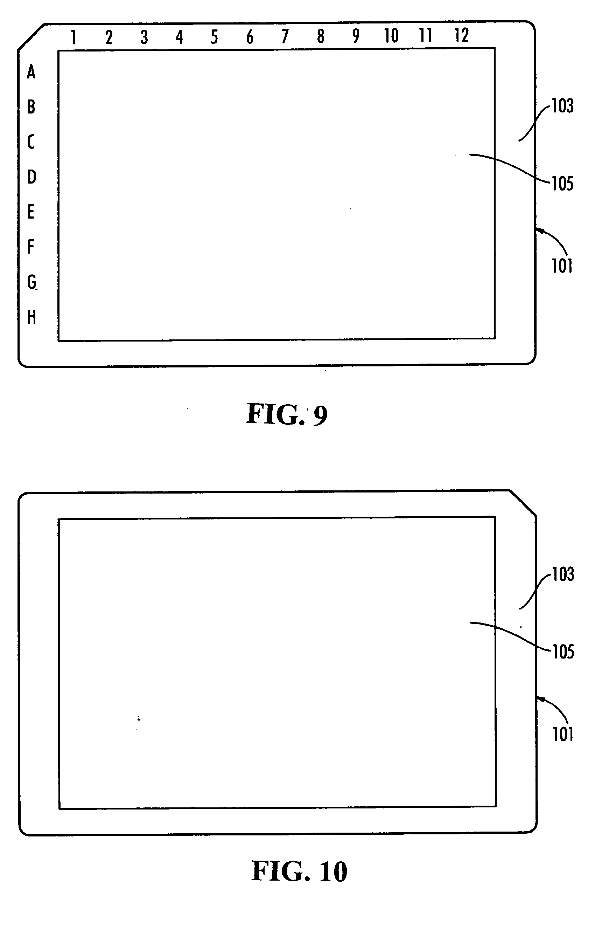

Fig. 9 shows the obverse face 101 of the large format specimen holder. A frame 103 encases a specimen collection medium, typically a form of filter paper. The plan area for a standard microtiter plate is 128 mm by 86 mm. Using cardboard or plastic to form a frame, an opening of 108 mm by 73 mm is available for the collection paper 105. The frame may be gridded using alphanumeric indicia or printed with target circles so that the samples may be identified.

Fig. 10 illustrates the reverse of the large format specimen holder in an embodiment having an open reverse side.

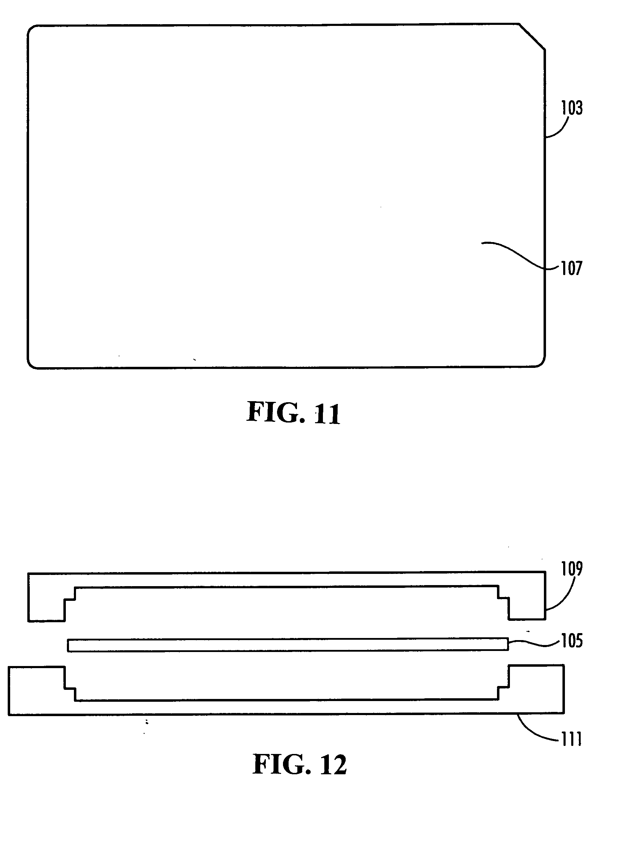

Fig. 11 illustrates a second embodiment of the large format specimen holder having a solid backing 107 to protect the collection paper from contact with contaminants.

Fig. 12 is an exploded view of the large format collection device showing the collection paper 105 sandwiched between top plate 109 and bottom plate 111. As illustrated, the plates are plastic. The arrangement of Figs. 1D and 1E is preferred when the plates are cardboard.

Other embodiments of the present invention are not presented here which are obvious to those ordinarily skilled the art, now or during the term of any patent issuing form this patent specification, and thus, are within the spirit and scope of this present invention.

Other embodiments of the present invention are not presented here which are obvious to those ordinarily skilled in the art, now or during the term of any patent issuing from this patent specification, and thus, are within the spirit and scope of this present invention.

## Claims

1. A device for the collection and storage of biological specimens comprising:
a. a rigid slide mount;
b. a biological specimen collection material encased in said slide mount; and
c. an unique identification means.

2. A device according to claim 1 wherein said rigid slide mount has the plan area and thickness of a standard 35 mm photographic slide.

3. A device according to claim 1 wherein said rigid slide mount has the plan area of a 96 well microtiter plate.

4. A device according to claim 1 wherein the slide mount is formed from plastic.

5. A device according to claim 1 wherein the slide mount is formed from pasteboard.

6. A device according to claim 1 wherein said specimen collection material is an untreated paper medium.

7. A device according to claim 1 wherein said specimen collection material is treated to preserve the specimen.

8. A device according to claim 1 wherein said unique identification means is a stamped number.

9. A device according to claim 1 wherein said unique identification means is a printed alphanumeric identification.

10. A device according to claim 1 wherein said unique identification means is a barcode.

11. A device according to claim 1 wherein said unique identification means is an RFID.

12. A device according to claim 1 wherein the biological specimen collection material is mounted in said slide mount in an unstressed condition.

13. A device according to claim 1 wherein said slide mount is open on one side.

14. A device according to claim 1 wherein said slide mount is open on two sides.

15. A device according to claim 2 further comprising means to protect the collection material.

16. A device according to claim 14 wherein said means to protect the collection material is a sliding means mounted between said collection material and said slide mount.
